# EUROPÄISCHE PATENTSCHRIFT

(11) **EP 2 628 398 B1**
(45) Veröffentlichungstag und Bekanntmachung des Hinweises auf die Patenterteilung: **07.09.2016**
(21) Anmeldenummer: 12156104.7
(22) Anmeldetag: 19.02.2012
(51) Int. Cl.: A23L 2/56, A23L 2/52, A23L 27/10, A23L 33/10, A23L 29/25

(54) **Stoffgemische**
Compositions of matter
Compositions de matière

(43) Veröffentlichungstag der Anmeldung: 21.08.2013
(73) Patentinhaber: Symrise AG, 37603 Holzminden (DE)
(72) Erfinder: Schrader, Dirk, 37603 Holzminden (DE); Riess, Thomas, 37603 Holzminden (DE); Sabater, Christopher, 37603 Holzminden (DE); Sleet, Christina, High Wycombe Buckinghamshire HP13 7XG (GB)
(74) Vertreter: Fabry, Bernd

(56) Entgegenhaltungen:
- WO-A1-2004/089991
- WO-A1-2011/089247
- DATABASE WPI Week 201039 Thomson Scientific, London, GB; AN 2010-G45614 XP002679749, & JP 2010 124817 A (SANEIGEN FFI KK) 10. Juni 2010 (2010-06-10)
- HODGSON J M ET AL: "Tea flavonoids and cardiovascular health", MOLECULAR ASPECTS OF MEDICINE, PERGAMON PRESS, OXFORD, GB, vol. 31, no. 6, 1 December 2010 (2010-12-01), pages 495-502, XP027527302, ISSN: 0098-2997 [retrieved on 2010-11-25]

## Beschreibung

### Gebiet der Erfindung

Die Erfindung befindet sich auf dem Gebiet der Aromastoffe und betrifft neue Stoffgemische mit verbesserten Solubilisations- und Geschmackseigenschaften, ein Verfahren zu deren Herstellung sowie deren Verwendung in Nahrungsmitteln.

### Stand der Technik

Polyphenole sowie Diterpenglucoside im Allgemeinen und Flavonoide im Besonderen stellen sekundäre Pflanzenstoffe dar, zu denen beispielsweise ein Großteil der Blütenfarbstoffe gehört. Pflanzen mit hohem Polyphenolgehalt sind beispielsweise die Apfelbeeren, die Blätter und Trauben der Weinreben, das Fruchtfleisch der Mangostanfrucht (*Garcinia mangostana*), der Saft des Granatapfels (*Punica granatum*), sowie die Blätter des Rotklees, des Ginkgo und des grünen Tees, um nur einige zu nennen. Darüber hinaus werden Flavonoide vor allem aus der Rinde von Pinien und aus Lärchenholz extrahiert. Seit langer Zeit sind diese Stoffe aus der Naturheilkunde dafür bekannt, dass sie antiallergisch, antiphlogistisch, antimikrobiell, antioxidativ, antiproliferativ und antikanzerogen wirken. Im Bereich der Nahrungsmittelindustrie werden Polyphenole insbesondere als Zusatzstoffe für Getränke, wie beispielsweise Limonaden oder Eistees eingesetzt; dort zeichnen sie sich neben ihren wertvollen gesundheitsfördernden Eigenschaften durch einen süßen oder die Bitterkeit maskierenden Geschmack aus.

Ein erheblicher Nachteil besteht indes darin, dass sich die besagten Wirkstoffe nur in geringen Mengen in Wasser lösen, vielmehr zeigen sie einmal in die Endformulierungen eingearbeitet die Tendenz, mit der Zeit auszufallen, was zwar keinen wirklich negativen Einfluss auf die Qualität des Produktes hat, aber aus Sicht des Konsumenten unter ästhetischen Gesichtspunkten eindeutig unerwünscht und einer Kaufentscheidung abträglich ist.

Aus dem Stand der Technik sind indes eine Reihe von Lösungsansätzen für die oben geschilderte Problematik bekannt:
So beschreibt beispielsweise die WO 2007 122251 A1 (Symrise) eine synergistische Mischung bei der zur Stabilitätsverbesserung Glycosylflavanonen mit Maltodextrinen und
Gummi Arabicum vermischt werden. Anschließend werden die Gemische einer Sprühtrocknung unterworfen.

Aus der internationalen Patentanmeldung WO 2007 107596 A1 (Symrise) ist die Verwendung von 4-Hydroxydihydrochalconen und deren Salze zur Intensivierung des süßen Geschmacks von Mitteln die zum Verzehr vorgesehen sind bekannt. In Beispiel 3 wird auch die Sprühtrocknung eines Gemischs aus Phloretin, Maltodextrin und konventionellem Gummi Arabicum beschrieben.

In der internationalen Patentanmeldung WO 2011 089247 A1 (Symrise) werden flüssige Solubilisierungsmittel für Polyphenole beschrieben, die mindestens einen polymeren Emulgator, Saponine sowie aliphatische Alkohole oder Polyole enthalten-

Die vorgeschlagenen Lösungen aus dem Stand der Technik sind indes nicht völlig befriedigend. So sind die sprühgetrockneten Solubilisierungsmittel geschmacklich unzureichend, während die flüssigen Solubilisierungsmittel zwar geschmacklich ansprechend sind, jedoch nur eine vergleichsweise geringe Menge an Wirkstoffen aufnehmen können, da die Lagerstabilität begrenzt ist. Außerdem sind die genannten Lösungsansätze von der Anwendung getrieben, da für Trockenmischungen keine stabile Lösung verfügbar war.

Die Aufgabe der vorliegenden Erfindung hat folglich darin bestanden, Stoffgemische auf Basis von Polyphenolen, Flavonoiden oder Diterpenglucosiden zur Verfügung zu stellen, die einen gegenüber dem Stand der Technik erhöhten Gehalt an diesen Wirkstoffen aufweisen und sich klar in Nahrungsmitteln, speziell Getränken auflösen lassen. Gleichzeitig sollten die Stoffgemische bei Einsatz in den besagten Nahrungsmitteln und speziell Getränken, denen oft trockene Konzentrate zugrunde liegen wie zum Beispiel Eistee zu einer Verbesserung des Mundgefühls und eine Abrundung des Geschmacks, speziell eine Verbesserung bei der Fruchtnote hervorrufen.

### Beschreibung der Erfindung

Gegenstand der Erfindung sind Stoffgemische, enthaltend
(a) Polyphenole, Flavonoide und/oder Diterpenglucoside,
(b) Polysaccharide sowie gegebenenfalls
(c) Saponine
wobei

Flavonoide ausgewählt sind aus der Gruppe, die gebildet wird von Dihydrochalkonen, Flavonen, Flavonolen, Flavanolen Flavanonen, Flavanonolen, Isoflavonen, Anthocyanidinen und Auronen, und
die Stoffgemische die Komponenten (a) und (b+c) im Gewichtsverhältnis 1:99 bis 80:20 enthalten
mit der Maßgabe, dass der Gehalt an Arabinogalactanproteinen in der Komponente (b) mindestens 11 Gew.-% beträgt.
Überraschenderweise wurde gefunden, dass der Einsatz von speziellen Polysacchariden mit hohem Gehalt an Arabinogalactanproteinen und vorzugsweise darüber hinaus geringem Aschegehalt die Herstellung trockener Pulver oder Granulate erlaubt, die sich gegenüber den bekannten flüssigen Zubereitungen zunächst schon dadurch auszeichnen, dass sie deutlich höheren Gehalt an Polyphenolen, Flavonoiden bzw. Diterpenglucosiden aufweisen. Die Stoffgemische, die vorzugsweise durch Sprüh- oder Gefriertrocknung entsprechender wässriger Lösungen oder Dispersionen erhältlich sind, lösen sich klar auf und verfügen auch über die gewünschten verbesserten geschmacklichen Eigenschaften: das Mundgefühl wird verbessert, der Geschmack abgerundet, die Fruchtigkeit speziell bei den Geschmacksrichtungen Pfirsich und Zitrone verbessert und die Bitterkeit mancher Flavonoide maskiert. Dies ist umso erstaunlicher, als den Mischungen bei der Trocknung nicht nur das Wasser, sondern auch das Lösungsmittelsystem durch Trocknung verändert wird.

### Polyphenole, Flavonoide sowie Diterpenglucoside

Die Auswahl der Wirkstoffe, die als Komponente (a) in Betracht kommen, ist weitgehend unkritisch und richtet sich dabei ausschließlich nach deren Anwendbarkeit im Bereich der Nahrungsmittelzubereitungen. Das schließt mit ein, dass anspruchsgemäß auch solche Polyphenole eingesetzt werden können, die aus physiologischen Gründen keine Anwendungen finden dürften, wie beispielsweise Quercetin. Es ist ebenfalls klar, dass die Erfindung die Beladung der Trägermaterialien mit den Wirkstoffen in Mengen zulässt, die für spezifische Anwendungen nicht mehr geeignet sind. Es sei jedoch darauf hingewiesen, dass es sich hierbei um Einzelfälle handelt und der Fachmann, an den sich die technische Lehre richtet, sehr wohl die Kenntnis hat, Wirkstoffe auszuwählen, die physiologisch akzeptabel sind und diese auch so zu dosieren, sei es bei der Beladung der Träger oder beim Zusatz der Stoffgemische zu den Verzehrmitteln, dass dies gesundheitlich unbedenklich ist. Was diesen Aspekt der Erfindung angeht, ist der Fachmann also in der Lage, die richtige Auswahl zu treffen, ohne hierzu ein Versuchsprogramm auflegen oder erfinderisch tätig werden zu müssen.

Die Erfindung umfasst bezüglich der Komponente (a) Polyphenole, Flavonoide und Diterpenglucoside, wobei klar ist, dass Flavonoide selbst eine Untergruppe der Polyphenole bilden. In der Tat stellen Flavonoide im Sinne der Erfindung die bevorzugten Wirkstoffe dar, die sich vom Grundgerüst des Flavans ableiten und aus zwei aromatischen Ringen bestehen, die durch einen Tetrahydropyran-Ring verbunden sind.

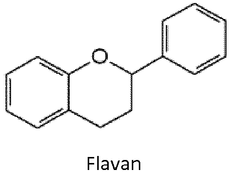

Das Grundgerüst der Flavonoide besteht demzufolge ebenfalls aus zwei aromatischen Ringen, die über eine C3-Brücke verknüpft sind. Ring A weist in der Regel das Substitutionsmuster des Phloroglucins auf, was auf seine Acetogeninherkunft hinweist. Ring B, der häufig in der 4' Position eine Hydroxylgruppe trägt (seltener in der 3' bzw. 3' und 5'-Stellung), sowie die C3-Brücke stammen aus dem Shikimisäureweg. Vielfach ist diese Brücke zu einem O-heterocyclischen Ring geschlossen, wobei die Ausnahme durch die Untergruppe der Chalkone gebildet wird. Insgesamt sind über 8000 verschiedene Flavonoide bekannt und charakterisiert. Je nach oxidationsgrad der C3-Brücke werden sie in verschiedene Untergruppen klassifiziert. Demzufolge stellen die folgenden Flavonoidgruppen auch wiederum bevorzugte Komponenten (a) dar, wie sie in der nachfolgenden Tabelle 1 wiedergegeben sind (vgl. Wikipedia, Stichwort "Flavonoide")

**Tabelle 1**

| Übersicht bevorzugte Klassen von Flavonoiden | | |
|---|---|---|
| **Klasse** | **Grundstruktur** | **Beispiele** |
| Dihydrochalkone | 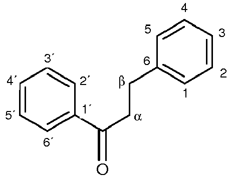 | Phloretin |
| Flavone | 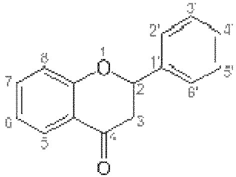 | Luteolin, Apigenin |
| Flavonole | 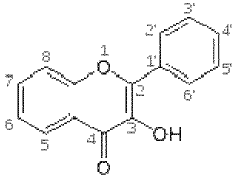 | Morin, Rutin, Kaempferol, Myricetin, Isorhamnetin, Fisetin |
| Flavanole | 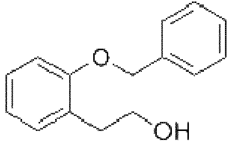 | Catechin, Gallocatechin, Epicatechin, Epigallocatechingallat |
| Flavanone | 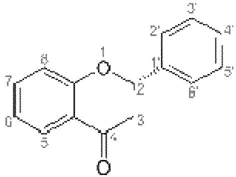 | Hesperetin, Naringenin, Eriodictyol |
| Flavanonole | 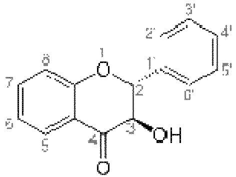 | Taxifolin |
| Isoflavone | 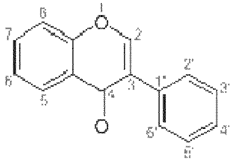 | Genistein, Daidzein, Licoricidin |

**Tabelle 1**

| Übersicht bevorzugte Klassen von Flavonoiden (Fortsetzung) | | |
|---|---|---|
| **Klasse** | **Grundstruktur** | **Beispiele** |
| Anthocyanidine (Anthocyane) | 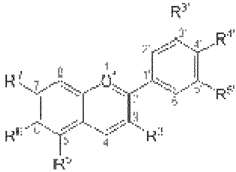 | Cyanidin, Delphinidin, Malvidin, pelargonidin, Peonidin, Petunidin |
| Aurone | 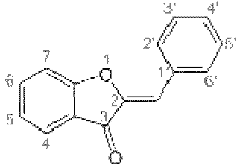 | Aureusidin |

Besonders vorteilhafte Lösungs- und Geschmackseigenschaften findet man im Sinne der Erfindung, wenn man als Komponente (a) Flavonoide vom Typ der Dihydrochalkone oder Flavanone einsetzt.

Als besonders bevorzugte Ausführungsform ist der Einsatz von zwei speziellen Flavonoiden anzusehen, nämlich Phloretin, Hesperetin oder deren Gemische:

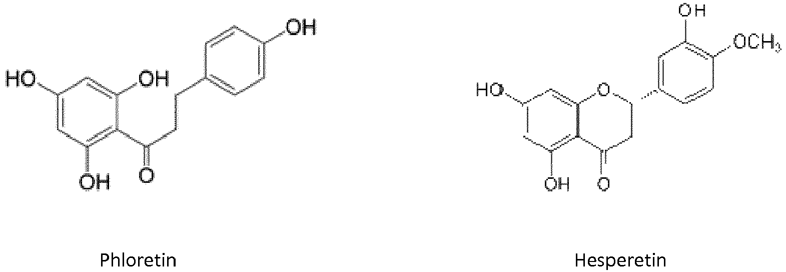

### Polysaccharide

Bei den Polysacchariden, die als Träger (Komponente b) für die oben beschriebenen Wirkstoffe in Betracht kommen, handelt es sich vorzugsweise um Kondensationsprodukte von Arabinose, Galactose, Rhamnose und/oder Glucuronsäure im Allgemeinen und Gummi Arabicum im Besonderen.

Gummi Arabicum besteht aus farblosen bis braunen, matten, spröden, geruchlosen Stücken mit glänzendem Bruch, die sich in warmem Wasser zu einer klaren, zähen, klebrigen, fad schmeckenden und schwach sauer reagierenden Flüssigkeit auflösen und unlöslich in Alkohol sind.

Der Stoff besteht hauptsächlich aus den sauren Erdalkali- und Alkalisalzen der sogenannten Arabinsäure (Polyarabinsäure), unter der man ein verzweigtes, aus L-Arabinose, D-Galactose, L-Rhamnose und D-Glucuronsäure im Verhältnis 3:3:1:1 bestehendes Polysaccharid versteht. Übliches Gummi Arabicum weist einen Gehalt an Arabinogalactanproteinen in einer Größenordnung von etwa 6 bis maximal 10 Gew.-% auf und hat sich im Sinne der vorliegenden Erfindung als Trägermaterial ungeeignet erwiesen. Erfindungsgemäß können nur solche Polysaccharide bzw. Gummi Arabicum eingesetzt werden, welche mindestens 11, vorzugsweise 12 bis 30 und insbesondere 15 bis 20 Gew.-% Arabinogalactanproteine aufweisen. Es ist ferner vorteilhaft, wenn der Aschegehalt - d.h. der Anteil an Arabinsäuresalze - der Träger weniger als 1 Gew.-% und vorzugsweise 0,2 bis 0,5 Gew.-% ausmacht und damit um mindestens 75 % niedriger als bei üblicher Handelsware (ca. 4 Gew.-%) liegt.

### Saponine

Saponine, die als zusätzliche Trägerstoffe (optionale Komponente c) in den Stoffgemischen zugegen sein zu können, stellen Glykoside von Steroiden, Steroidalkaloiden und Triterpenen dar. Die Bezeichnung Saponine geht auf ihre Eigenschaft zurück ähnlich wie Seifen stabile Schäume zu erzeugen. Bekannt sind die Saponine der Rosskastanie, die auch zum Waschen eingesetzt werden. Aufgrund der Vielzahl möglicher Kohlenhydratstrukturen und der großen strukturellen Variabilität der Aglycone weist diese Stoffgruppe eine entsprechend große Strukturvielfalt und damit eine große Variabilität in den biologischen Eigenschaften auf. Im Sinne der Erfindung kommen selbstverständlich nur solche Saponine in Betracht, die gesundheitlich unbedenklich sind und ebenso wie die Polysaccharide eine nahrungsmittelrechtliche Zulassung besitzen. Welche Saponine diese Bedingung erfüllen, sind dem Fachmann bekannt; wegen ihres überwiegend giftigen Charakters kommen beispielsweise Saponine, die sich von Steroidalkaloiden ableiten, kaum für die Herstellung der erfindungsgemäßen Stoffgemische in Frage. Umgekehrt eignen sich in besonderer Weise solche Saponine, die auf Basis von Tomaten, Kartoffeln, Sojabohnen, Kastanien, Kräutern oder Teepflanzen gewonnen werden.
In einer besonders bevorzugten Ausführungsform der vorliegenden Erfindung werden solche Saponine eingesetzt, die als Aglycon die Quillainsäure aufweisen.

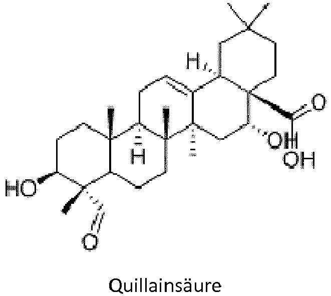

Die entsprechenden Saponine werden im Allgemeinen aus der Rinde des so genannten "Seifenrindenbaum" (*Quillaja saponaria*) gewonnen, der in Chile beheimatet ist.
Saponine im Allgemeinen und Quillaja-Saponine im Besonderen stellen vorzugsweise wässrige oder alkoholische Auszüge dar, die insbesondere etwa 2 bis etwa 50, vorzugsweise etwa 5 bis etwa 35 und besonders bevorzugt etwa 10 bis etwa 25 Gew.-% Triterpensaponine enthalten, wobei sich diese Mengenangaben auf den Saponinextrakt beziehen. Die Triterpene sind in er Regel in der 3- und 28-Stellung mit Glyconen verknüpft, wobei bislang etwa 50 verschiedene Quillaja-Saponine bekannt sind. Das Molekulargewicht der Saponine liegt vorzugsweise im Bereich von etwa 1.300 bis etwa 2.600, besonders bevorzugt bei etwa 1.800 bis etwa 2.000 Dalton. Unterhalb von 500 ppm liegen die Saponine als Monomere vor, darüber aggregieren sie zu Micellen mit Molekulargewichten im Bereich von 100.000 Dalton. Bezüglich der Gewinnung der Quillaja-Saponine wird auf die Druckschriften US 5,057,540 und US 5,817,314 verwiesen.

### Stoffgemische

Die Saponine werden im Sinne der Erfindung im Allgemeinen als Co-Trägerstoffe eingesetzt, d.h. dass ihr Anteil an dem Träger in aller Regel unter 50 Gew.-% und damit unterhalb der eingesetzten Menge an Polysacchariden liegt; dies ist aber nicht zwingend. Das bevorzugte Mischungsverhältnis zwischen den beiden Komponenten (b) und (c) beträgt auf das Gewicht bezogen etwa 20:1 bis etwa 1:2, besonders bevorzugt etwa 12:1 bis etwa 1:1 und insbesondere etwa 10:1 bis etwa 2:1.

Dem gegenüber können die Stoffgemische die Komponenten (a) und (b+c) im Gewichtsverhältnis 1:99 bis 80:20, vorzugsweise 40:60 bis 20:80 und insbesondere 20:80 bis 30:70 enthalten.

Die Stoffgemische enthalten einen Restwassergehalt von typisch weniger als 5 Gew.-%, vorzugsweise weniger als 4 Gew.-%. Insbesondere sind die Stoffgemische nahezu wasserfrei. Darüber hinaus können sie in untergeordneten Mengen Triacetin, Polyole (z.B. Propylenglykol oder Glycerin) und Spuren an aliphatischen Alkoholen, speziell Ethanol enthalten.

### Herstellverfahren

Ein weiterer Gegenstand der Erfindung betrifft ein Verfahren zur Herstellung der Stoffgemische, bei dem man
(a) Polyphenole, Flavonoide und/oder Diterpenglucoside in einem Lösungsmittelgemisch bestehend aus Wasser, Triacetin, Polyolen und Alkoholen löst oder dispergiert,
(b) die so erhaltene Lösung oder Dispersion mit einer wässrigen Polysaccharid-Lösung mit einem Gehalt an Arabinogalactanproteinen im Gummi Arabicum von mindestens 11 Gew.-% und gegebenenfalls Saponinen versetzt,
(c) die erhaltene Mischung bis auf einen Restgehalt von maximal 5, vorzugsweise maximal 4 und insbesondere unter 2 Gew.-% entwässert und gegebenenfalls
(d) das Trocknungsprodukt zu einem Pulver vermahlt oder granuliert.
Die Lösungs- bzw. Dispersionsmittel für die aktiven Wirkstoffe setzen sich erfindungsgemäß aus
- Wasser,
- Triacetin,
- Polyolen (beispielsweise Ethylenglykol, Propylenglykol, Butylenglykol, Diethylenglykol, Dipropylenglykol, Glycerin, Sorbitol oder deren Gemische) und/oder
- niederen aliphatischen Alkoholen, vorzugsweise Ethanol oder Isopropylalkohol, zusammen, wobei vorzugsweise auf 100 Gewichtsteile Wasser
   (i) etwa 1 bis etwa 70, vorzugsweise etwa 5 bis etwa 40 und insbesondere etwa 15 bis etwa 30 Gewichtsteile Triacetin,
   (ii) etwa 1 bis etwa 70, vorzugsweise etwa 5 bis etwa 40 und insbesondere etwa 15 bis etwa 30 Gewichtsteile Polyole, und
   (iii) etwa 1 bis etwa 40, vorzugsweise etwa 5 bis etwa 30 und insbesondere etwa 10 bis etwa 20 Gewichtsteile Alkohole
   entfallen. Die aktiven Wirkstoffe, also die Polyphenole, Flavonoide oder Diterpenglucoside werden in der Regel ebenfalls in gelöstem Zustand, beispielsweise in Ethylenglykol oder Propylenglykol bzw. deren Mischungen eingesetzt (zur besseren Unterscheidung als "LD1" bezeichnet) und mit den Lösungs- bzw. Dispersionsmitteln ("LD2") vermischt.

Gegenüber Zubereitungen, die die Wirkstoffe flüssig solubilisiert enthalten und als solche den Nahrungsmittel zugesetzt werden, können im Fall der vorliegenden Erfindung Lösungen oder Dispersionen LD1 mit deutlich höherem Wirkstoffgehalt, beispielsweise statt 5 Gew.-% etwa 10 bis 15 Gew.%, eingesetzt werden, da diese ja nur eine kurze Zeit bis zur Trocknung stabil bleiben müssen. Auf diese Weise werden auch die gegenüber dem Stand der Technik gewünschten höheren Beladungen der Träger erzielt.

Bezogen auf den Wirkstoffgehalt in den Lösungen bzw. Dispersionen LD1 werden die Lösungs- bzw. Dispersionsmittel LD2 üblicherweise im Gewichtsverhältnis von etwa 1:10 bis etwa 1:1000, vorzugsweise etwa 1:25 bis etwa 1:500 und insbesondere etwa 1:50 bis 1:100 eingesetzt.

Die Trocknung der Lösungen bzw. Dispersionen kann grundsätzlich in jeder Art von Kontakt- oder Konvektionstrockner durchgeführt werden und ist wenig kritisch. Bevorzugt ist jedoch die Entwässerung durch Sprühtrocknung oder Wirbelschichttrocknung bei Lufttemperaturen im Bereich von 180 bis 200 °C und Austrittstemperaturen für das Trockengut von 50 bis 80 °C. Alternativ können die Lösungen auch einer Gefriertrocknung (Lyophilisierung) unterworfen werden.

### Gewerbliche Anwendbarkeit

Durch den Einsatz spezieller Polysaccharide ist es möglich, hochbeladene Trocknungsprodukte von Polyphenolen, Flavonoiden oder Diterpenglucosiden zur Verfügung zu stellen, die sich insbesondere in Getränken klar lösen und gegenüber Zubereitungen des Stands der Technik auch noch über verbesserte Geschmackseigenschaften verfügen können.

Zwei weitere Gegenstände der Erfindung betreffen daher einerseits
- die Verwendung von Polysacchariden mit einem Gehalt an Arabinogalactanproteinen von mindestens 11 Gew.-% als Trägersubstanz bei der Trocknung von wässrigen Lösungen oder Dispersionen von Polyphenolen, Flavonoiden und oder Diterpenglucosiden und zum anderen
- die Verwendung der erfindungsgemäßen Stoffgemische zur Herstellung von Nahrungsmitteln, speziell Getränken und insbesondere Limonaden und Eistees. vorzugsweise klaren und physikalisch-stabilen Getränken und insbesondere Eistees gerichtet, die die erfindungsgemäßen Stoffgemische beispielsweise in Mengen von etwa 0,02 bis etwa 0,5 vorzugsweise etwa 0,03 bis etwa 0,3 und insbesondere etwa 0,05 bis etwa 0,1 Gew.-% enthalten.

### Beispiele

### Beispiele 1 bis 4, Vergleichsbeispiel V1

In einem Ultraturrax wurde eine 12 Gew.-%ige Lösung eines Flavonoids in 1,2-Propylenglykol vorgelegt und mit wässrigem Ethanol und Triacetin versetzt. Anschließend wurden Gummi Arabicum und gegebenenfalls Saponine beigefügt und eine weitere Menge Propylenglykol hinzugegeben und die Mischung ca. 1 Minute bei 3000 Upm homogenisiert. Es wurden klare Lösungen einer Zusammensetzung erhalten, wie sie in Tabelle 2 wiedergegeben ist. Die Beispiele 1 bis 4 sind erfindungsgemäß, das Beispiel V1 dient zum Vergleich.

**Tabelle 2**

| Zusammensetzung der Lösungen für die Trocknung (Mengenangaben als Gew.-%) | | | | | |
|---|---|---|---|---|---|
| **Komponenten** | **1** | **2** | **3** | **4** | **V1** |
| Phloretin | 30 | 30 | - | - | 30 |
| Hesperetin | - | 12 | 30 | - | - |
| 1,2-Propylenglykol | Ad 100 | | | | |
| Triacetin | 200 | 200 | 200 | 200 | 200 |
| Ethanol | 50 | 50 | 50 | 50 | 50 |
| Wasser | 780 | 780 | 780 | 780 | 780 |
| Gummi Arabicum¹ | 50 | 50 | 50 | 50 | - |
| Gummi Arabicum² | - | - | - | - | 50 |
| Quillaja Extrakt, 70 %ig in Wasser | 25 | 25 | - | 25 | 25 |
| Maltodextrin DE 18-20 | 700 | 700 | 700 | 700 | 700 |

| | | | | | |
|---|---|---|---|---|---|
| 1) Arabinogalactanproteingehalt: 13 Gew.-%, Aschegehalt 0,2 Gew.-% 2) Arabinogalactanproteingehalt: 4 Gew.-%, Aschegehalt 4 Gew.-% | | | | | |

Anschließend wurden die Formulierungen 1, 2 und V1 bei 190 °C sprühgetrocknet, während die Formulierungen 3 und 4 einer Gefriertrocknung unterworfen und in einer Pulvermühle vermahlen wurden. Alle Produkte wiesen anschließend eine Partikelgröße von durchschnittlich 0,1 mm und einen Wassergehalt von unter 0,5 Gew.-% auf.

### Beispiele 5 bis 8, Vergleichsbeispiele V2 und V3

Die oben hergestellten festen Stoffgemische wurden zur Herstellung von Softdrinks verwendet und die geschmacklichen Eigenschaften von einem Panel bestehend aus 5 geschulten Testern auf einer Skala von 1 (nicht vorhanden) bis 10 (stark ausgeprägt) bewertet. Alle Produkte waren in den Formulierungen klar löslich. Die Zusammensetzungen und Ergebnisse sind in der nachfolgenden Tabelle 3 zusammengefasst. Es handelt sich um Mittelwerte von 5 Messreihen. Die Beispiele 5 bis 8 sind erfindungsgemäß, die Beispiele V2 und V3 dienen zum Vergleich.

| **Zusammensetzung** | **5** | **6** | **7** | **8** | **V2** | **V3** |
|---|---|---|---|---|---|---|
| Sucrose | 70 | 70 | 70 | 70 | 70 | 70 |
| Zitronensäure | 0.2 | 0.2 | 0.2 | 0.2 | 0.2 | 0.2 |
| Pfirsicharoma | 0,1 | 0,1 | - | - | 0,1 | - |
| Zitronenaroma | - | - | 0,1 | 0,1 | - | 0,1 |
| Stoffgemisch 1 | 0,05 | - | - | - | - | - |
| Stoffgemisch 2 | - | 0,05 | - | - | - | - |
| Stoffgemisch 3 | - | - | 0,05 | - | - | - |
| Stoffgemisch 4 | - | - | - | 0,05 | - | - |
| Stoffgemisch V1 | - | - | - | - | 0,05 | 0,05 |
| Wasser | Ad 1000 | | | | | |

| ***Geschmackliche Beurteilung*** | | | | | | |
|---|---|---|---|---|---|---|
| Runder Gesamteindruck | 7 | 7 | 8 | 8 | 6 | 6 |
| Fruchtnote Pfirsich | 8 | 9 | - | - | 6 | - |
| Fruchtnote Zitrone | - | - | 8 | 9 | - | 7 |
| Bittergeschmack | 3 | 3 | 3 | 3 | 4 | 4 |
| Stabilität | stabil | stabil | stabil | stabil | stabil | instabil |

Die Beispiele und Vergleichsbeispiele zeigen, dass die erfindungsgemäße Aufgabe vollumfänglich erfüllt wird: die Endformulierungen erwiesen sich als geschmacklich rund, ohne wesentlichen Bittergeschmack, dafür aber mit intensivem Fruchtaroma. Dies wird besonders deutlich, wenn man die erfindungsgemäßen Stoffgemische 1 bis 4 mit Beispiel V1 vergleicht: hier zeigt sich, dass die verwendeten Polysaccharide mit hohem Arabinogalactanprotein- und geringem Aschegehalt zu einer deutlichen Geschmacksverbesserung, gegenüber gleichartigen Stoffgemischen führen, die auf Basis konventionellem Gummi Arabicums hergestellt worden waren. Der Einsatz von Trägern aus Polysacchariden und Saponinen führt zu einer weiteren Geschmacksverbesserung.

## Patentansprüche

1. Stoffgemische, enthaltend
(a) Polyphenole, Flavonoide und/oder Diterpenglucoside,
(b) Polysaccharide sowie gegebenenfalls
(c) Saponine
wobei
Flavonoide ausgewählt sind aus der Gruppe, die gebildet wird von Dihydrochalkonen, Flavonen, Flavonolen, Flavanolen Flavanonen, Flavanonolen, Isoflavonen, Anthocyanidinen und Auronen, und
die Stoffgemische die Komponenten (a) und (b+c) im Gewichtsverhältnis 1:99 bis 80:20 enthalten
mit der Maßgabe, dass der Gehalt an Arabinogalactanproteinen in der Komponente (b) mindestens 11 Gew.-% beträgt.

2. Stoffgemische nach Anspruch 1, **dadurch gekennzeichnet, dass** die Flavonoide (Komponente a) Phloretin oder Hesperetin oder deren Gemische darstellen.

3. Stoffgemische nach den Ansprüchen 1 und/oder 2, **dadurch gekennzeichnet, dass** die Polysaccharide (Komponente b) Kondensationsprodukte von Arabinose, Galactose, Rhamnose und/oder Glucuronsäure darstellen.

4. Stoffgemische nach mindestens einem der Ansprüche 1 bis 3 , **dadurch gekennzeichnet, dass** die Polysaccharide (Komponente b) Gummi Arabicum darstellen.

5. Stoffgemische nach mindestens einem der Ansprüche 1 bis 4 , **dadurch gekennzeichnet, dass** die Polysaccharide (Komponente b) einen Gehalt an Arabinogalactanproteinen von 12 bis 30 Gew.-% aufweisen.

6. Stoffgemische nach mindestens einem der Ansprüche 1 bis 5 , **dadurch gekennzeichnet, dass** die Polysaccharide (Komponente b) einen Aschegehalt von weniger als 1 Gew.-% aufweisen.

7. Stoffgemische nach mindestens einem der Ansprüche 1 bis 6 , **dadurch gekennzeichnet, dass** sie einen Wassergehalt von weniger als 5 Gew.-% aufweisen.

8. Verfahren zur Herstellung von Stoffgemischen nach Anspruch 1, bei dem man
(a) Polyphenole, Flavonoide und/oder Diterpenglucoside in einem Lösungsmittelgemisch bestehend aus Wasser, Triacetin, Polyolen und Alkoholen löst oder dispergiert,
(b) die so erhaltene Lösung oder Dispersion mit einer wässrigen Polysaccharid-Lösung mit einem Gehalt an Arabinogalactanproteinen im Gummi Arabicum von mindestens 11 Gew.-% und gegebenenfalls Saponinen versetzt,
(c) die erhaltene Mischung bis auf einen Restgehalt von maximal 5 Gew.-% entwässert und gegebenenfalls
(d) das Trocknungsprodukt zu einem Pulver vermahlt oder granuliert.

9. Verfahren nach Anspruch 8, **dadurch gekennzeichnet, dass** die Entwässerung durch Sprühtrocknung, Wirbelschichttrocknung oder Lyophilisierung erfolgt.

10. Verwendung von Polysacchariden mit einem Gehalt an Arabinogalactanproteinen von mindestens 11 Gew.-% als Trägersubstanzen bei der Trocknung von wässrigen Lösungen oder Dispersionen von Polyphenolen, Flavonoiden und/oder Diterpenglucosiden.

11. Verwendung von Stoffgemischen nach Anspruch 1 zur Herstellung von Nahrungsmitteln.

12. Nahrungsmittel enthaltend die Stoffgemische gemäß Anspruch 1.

## Claims

1. Substance mixtures, comprising
(a) polyphenols, flavonoids and/or diterpene glucosides,
(b) polysaccharides and optionally
(c) saponins
wherein
flavonoids are selected from the group consisting of dihydrochalcones, flavones, flavonols, flavanols, flavanones, flavanonols, isoflavones, anthocyanidins and aurones, and the substance mixtures comprise components (a) and (b+c) in the weight ratio of from 1:99 to 80:20
with the proviso that the content of arabinogalactan proteins in component (b) is at least 11% by weight.

2. Substance mixtures according to claim 1, **characterized in that** the flavonoids (component a) are phloretin or hesperetin or mixtures thereof.

3. Substance mixtures according to claims 1 and/or 2, **characterized in that** the polysaccharides (component b) are condensation products of arabinose, galactose, rhamnose and/or glucuronic acid.

4. Substance mixtures according to at least one of claims 1 to 3, **characterized in that** the polysaccharides (component b) is gum arabic.

5. Substance mixtures according to at least one of claims 1 to 4, **characterized in that** the polysaccharides (component b) have a content of arabinogalactan proteins of from 12 to 30 % by weight.

6. Substance mixtures according to at least one of claims 1 to 5, **characterized in that** the polysaccharides (component b) have an ash content of less than 1 % by weight.

7. Substance mixtures according to at least one of claims 1 to 6, **characterized in that** they have a water content of less than 5 % by weight.

8. A process for the production of substance mixtures according to claim 1, wherein
(a) polyphenols, flavonoids and/or diterpene glucosides are dissolved or dispersed in a solvent mixture consisting of water, triacetin, polyols and alcohols,
(b) the solution or dispersion thus obtained is reacted with an aqueous polysaccharide solution with a content of arabinogalactan proteins in the gum arabic of at least 11% by weight and optionally saponins,
(c) the mixture obtained is dehydrated up to a residual content of a maximum of 5% by weight water and optionally
(d) the dried product is milled or granulated to a powder.

9. A process according to claim 8, **characterized in that** dehydration is carried out by spray-drying, fluidised-bed drying or lyophilisation.

10. Use of polysaccharides with a content of arabinogalactan proteins of at least 11% by weight as carrier substances during the drying of aqueous solutions or dispersions of polyphenols, flavonoids and/or diterpen glucosides.

11. Use of substance mixtures according to claim 1 for the production of foods.

12. Foods comprising the substance mixtures according to claim 1.

## Revendications

1. Mélanges de matières, contenant :
(a) des polyphénols, des flavonoïdes et/ou des glucosides de diterpène,
(b) des polysaccharides et éventuellement
(c) des saponines,
les flavonoïdes étant choisis dans le groupe constitué par les dihydrochalcones, les flavones, les flavonols, les flavanols, les flavanones, les flavanonols, les isoflavones, les anthocyanidines et les aurones, et
les mélanges de matières contenant les composants (a) et (b+c) en un rapport en poids de 1:99 à 80:20,
à condition que la teneur en protéines arabinogalactane dans le composant (b) soit d'au moins 11 % en poids.

2. Mélanges de matières selon la revendication 1, **caractérisés en ce que** les flavonoïdes (composant a) sont la phlorétine ou l'hespérétine ou leurs mélanges.

3. Mélanges de matières selon les revendications 1 et/ou 2, **caractérisés en ce que** les polysaccharides (composant b) sont des produits de condensation d'arabinose, de galactose, de rhamnose et/ou d'acide glucuronique.

4. Mélanges de matières selon au moins l'une quelconque des revendications 1 à 3, **caractérisés en ce que** les polysaccharides (composant b) sont la gomme arabique.

5. Mélanges de matières selon au moins l'une quelconque des revendications 1 à 4, **caractérisés en ce que** les polysaccharides (composant b) présentent une teneur en protéines arabinogalactane de 12 à 30 % en poids.

6. Mélanges de matières selon au moins l'une quelconque des revendications 1 à 5, **caractérisés en ce que** les polysaccharides (composant b) présentent une teneur en cendres de moins de 1 % en poids.

7. Mélanges de matières selon au moins l'une quelconque des revendications 1 à 6, **caractérisés en ce qu'**ils présentent une teneur en eau de moins de 5 % en poids.

8. Procédé de fabrication de mélanges de matières selon la revendication 1, selon lequel
(a) des polyphénols, des flavonoïdes et/ou des glucosides de diterpène sont dissous ou dispersés dans un mélange de solvants constitué par de l'eau, de la triacétine, des polyols et des alcools,
(b) la solution ou dispersion ainsi obtenue est mélangée avec une solution aqueuse de polysaccharides ayant une teneur en protéines arabinogalactane dans la gomme arabique d'au moins 11 % en poids et éventuellement des saponines,
(c) le mélange obtenu est déshydraté jusqu'à une teneur résiduelle d'au plus 5 % en poids, et éventuellement
(d) le produit du séchage est broyé ou granulé en une poudre.

9. Procédé selon la revendication 8, **caractérisé en ce que** la déshydratation a lieu par séchage par pulvérisation, séchage en lit fluidisé ou lyophilisation.

10. Utilisation de polysaccharides ayant une teneur en protéines arabinogalactane d'au moins 11 % en poids en tant que substances supports lors du séchage de solutions ou dispersions aqueuses de polyphénols, de flavonoïdes et/ou de glucosides de diterpène.

11. Utilisation de mélanges de matières selon la revendication 1 pour la fabrication de produits alimentaires.

12. Produit alimentaire contenant les mélanges de matières selon la revendication 1.
